# EUROPEAN PATENT APPLICATION

(11) **EP 4 675 511 A1**
(43) Date of publication of application: **07.01.2026**
(21) Application number: 23925326.3
(22) Date of filing: 02.03.2023
(51) Int. Cl.: G06N 10/00

(54) **INFORMATION PROCESSING PROGRAM, INFORMATION PROCESSING DEVICE, AND INFORMATION PROCESSING METHOD**

(71) Applicant: FUJITSU LIMITED, Kawasaki-shi, Kanagawa 211-8588 (JP)
(72) Inventor: NODA, Kunihiro, Kawasaki-shi, Kanagawa 211-8588 (JP)
(74) Representative: Haseltine Lake Kempner LLP
(86) International application number: PCT/JP2023/007876
(87) International publication number: WO 2024/180772

(57) **Abstract**

An algorithm having a combination of processing by a quantum computer and processing by a classical computer may take a long time to be completed. An information processing program causes a computer to execute a process of: acquiring a call stack of plural first programs for utilizing a quantum computer; determining a section of a loop process in the first programs on the basis of the call stack; measuring a first execution time of the section determined and a first utilization time of the quantum computer in the section determined; and estimating, on the basis of the first execution time and the first utilization time, a second execution time of the section determined and a second utilization time of the quantum computer in the section determined. The execution time of an algorithm having a combination of processing by a quantum computer and processing by a classical computer is thereby able to be shortened.

## Description

### Technical Field

The present invention relates to an information processing program, an information processing apparatus, and an information processing method.

### Background Art

In algorithms that achieve specific objectives by a combination of processing by a quantum computer and processing by a classical computer, processing proceeds back and forth repeatedly between the quantum computer and the classical computer. For example, the quantum computer is a computer driven by use of quantum-mechanical phenomena and the classical computer is an ordinary computer commonly used today. Furthermore, algorithms executed back and forth between both of such computers include, for example, variational quantum algorithm (VQAs) and variational quantum eigensolvers (VQEs).

In execution of a VQA, for example, a user defines a quantum circuit and submits the quantum circuit serving as a calculation job to an execution queue of a quantum computer, that is, to a job scheduler. A job to be executed next is then determined by the job scheduler and the job determined is executed by the quantum computer.

### Citation List

### Patent Literature

Patent Literature 1: Japanese National Publication of International Patent Application No. 2022-511613
Patent Literature 2: Japanese National Publication of International Patent Application No. 2021-530783

### Summary of invention

### Technical Problem

However, it takes a long time for an algorithm to be completed, the algorithm having a combination of processing by a quantum computer and processing by a classical computer. For example, if job scheduling is done with a job being submitted to the end of an execution queue, a waiting time for execution of the job will be generated every time there is a transition between a classical computer and a quantum computer. Therefore, in a case where the waiting time for execution of a job is one day and the transition between those computers, that is, an iteration occurs 100 times before execution of a VQA is completed, for example, 100 days or more will be needed for the execution of the VQA to be completed.

In one aspect, an object is to shorten the execution time of an algorithm having a combination of processing by a quantum computer and processing by a classical computer.

### Solution to Problem

According to an aspect of an embodiment, an information processing program causes a computer to execute a process including acquiring a call stack of a first program for utilizing a quantum computer, determining a section of a loop process in the first program, based on the call stack, measuring a first execution time of the section determined and a first utilization time of the quantum computer in the section determined, and estimating, based on the first execution time and the first utilization time, a second execution time of the section determined and a second utilization time of the quantum computer in the section determined.

### Advantageous Effects of Invention

In one aspect, the execution time of an algorithm having a combination of processing by a quantum computer and processing by a classical computer is able to be shortened.

### Brief Description of Drawings

FIG. 1 is a diagram illustrating an example of a quantum circuit.
FIG. 2 is a diagram for description of a hybrid quantum-classical algorithm.
FIG. 3 is a diagram illustrating an example of a quantum program.
FIG. 4 is a diagram illustrating an example of a configuration of the quantum program.
FIG. 5 is a diagram illustrating an example of a configuration of an information processing system according to an embodiment.
FIG. 6 is a diagram for description of job scheduling by a quantum computer.
FIG. 7 is a diagram for description of job scheduling by a hybrid quantum-classical algorithm.
FIG. 8 is a diagram illustrating an example of a configuration of a quantum program.
FIG. 9 is a diagram for description of execution of an ordinary program.
FIG. 10 is a diagram for description of a waiting time generated by a hybrid quantum-classical algorithm.
FIG. 11 is a diagram illustrating an example of a configuration of a user computer 10 according to the embodiment.
FIG. 12 is a diagram illustrating an example of a configuration of a management computer 100 according to the embodiment.
FIG. 13 is a diagram illustrating an example of a configuration of a quantum computer 200 according to the embodiment.
FIG. 14 is a flowchart illustrating an example of a flow of a time estimation and job scheduling process according to the embodiment.
FIG. 15 is a diagram illustrating an example of a functional configuration of the time estimation and job scheduling process according to the embodiment.
FIG. 16 is a diagram illustrating an example of a configuration of an information processing system for executing the time estimation and job scheduling process according to the embodiment.
FIG. 17 is a diagram illustrating examples of source code of a quantum program of a hybrid quantum-classical algorithm.
FIG. 18 is a diagram for description of a call stack according to the embodiment.
FIG. 19 is a diagram for description of a determination of a loop section in a case A according to the embodiment.
FIG. 20 is a diagram for description of a call stack in the case A according to the embodiment.
FIG. 21 is a diagram for description of a determination of a loop section in a case B according to the embodiment.
FIG. 22 is a diagram for description of a call stack in the case B according to the embodiment.
FIG. 23 is a diagram for description of a time estimation process according to the embodiment.
FIG. 24 is a diagram for description of a job scheduling process according to the embodiment.
FIG. 25 is a diagram for description of the job scheduling process along a time series, according to the embodiment.
FIG. 26 is a diagram illustrating an example of execution times and utilization times of respective iterations, according to the embodiment.
FIG. 27 is a diagram illustrating an example of a hardware configuration of the user computer 10 according to the embodiment.

### [Description of Embodiments] (DESCRIPTION OF EMBODIMENTS)

An information processing program, an information processing apparatus, and an information processing method, according to an embodiment will hereinafter be described in detail on the basis of the drawings. Embodiments are not to be limited by this embodiment. Furthermore, embodiments may be combined as appropriate so long as no contradiction arises therefrom.

A quantum circuit executed on a quantum computer will be described first. A quantum circuit is one type of representation method for processing executed on a quantum computer and is used comparatively often. In execution of a VQA, for example, a user defines a quantum circuit, which is executed as a calculation job on a quantum computer.

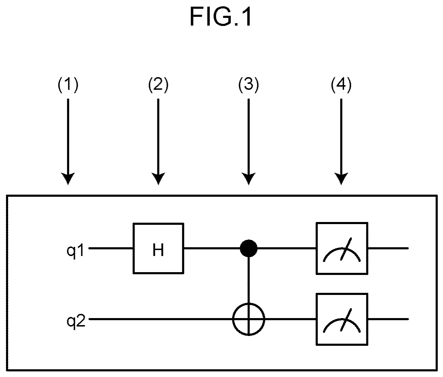

FIG. 1 is a diagram illustrating an example of a quantum circuit. As illustrated in FIG. 1, for example, quantum bits represented by q1 and q2 are described by being arranged vertically in a quantum circuit. Quantum bits or qubits represent units of information in quantum computers. Furthermore, as illustrated in FIG. 1, processing for each quantum bit in the quantum circuit is written from left to right along a time series. The processing for each quantum bit is called quantum gates.

The following description is on execution of the quantum circuit by the quantum computer. In the example of FIG. 1, (1) the quantum bits q1 and q2 are present, and firstly, the quantum computer (2) causes an H gate, which is a type of quantum gate, to act on the quantum bit q1. Subsequently, the quantum computer (3) causes a CNOT gate, which is a type of quantum gate, to act on the quantum bits q1 and q2. The quantum computer then (4) measures values of the quantum bits q1 and q2 by reading values stored in the quantum bits q1 and q2 as a result of processing.

Hybrid quantum-classical algorithms targeted in this embodiment will be described next. Hybrid quantum-classical algorithms are, for example, algorithms, in which processing repeatedly proceeds back and forth between a quantum computer and a classical computer, and include VQAs and VQEs. This embodiment will be described by use of a VQA as an example of a hybrid quantum-classical algorithm but targets to be executed may include other algorithms, such as VQEs, without being limited to VQAs.

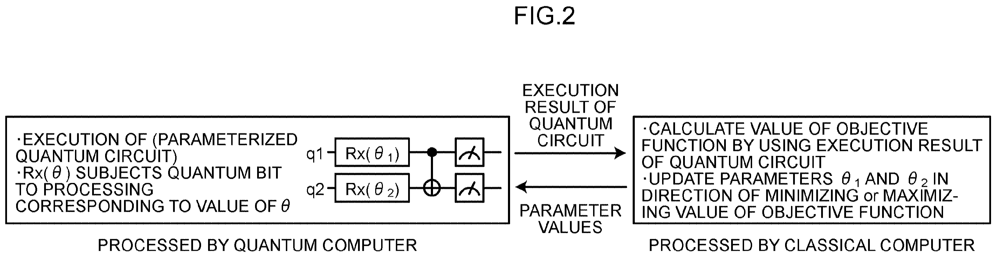

FIG. 2 is a diagram for description of a hybrid quantum-classical algorithm. For the example in FIG. 2, processing in a quantum computer is illustrated in a block on the left and processing in a classical computer is illustrated in a block on the right. As illustrated in FIG. 2, for example, the quantum computer executes a parameterized quantum circuit and the classical computer receives a result of this execution and calculates a value of a predefined objective function on the basis of this execution result. The classical computer then performs optimization processing by variationally updating parameters θ₁ and θ₂ until the value of the objective function is minimized or maximized, for example. The quantum computer executes the quantum circuit with the updated parameters until the optimization processing is completed and the classical computer receives a result of this execution of the quantum circuit and repeats the calculation of the value of the objective function and the update of the parameters on the basis of this execution result. In the hybrid quantum-classical algorithm, processing thus repeatedly proceeds back and forth between the quantum computer and the classical computer.

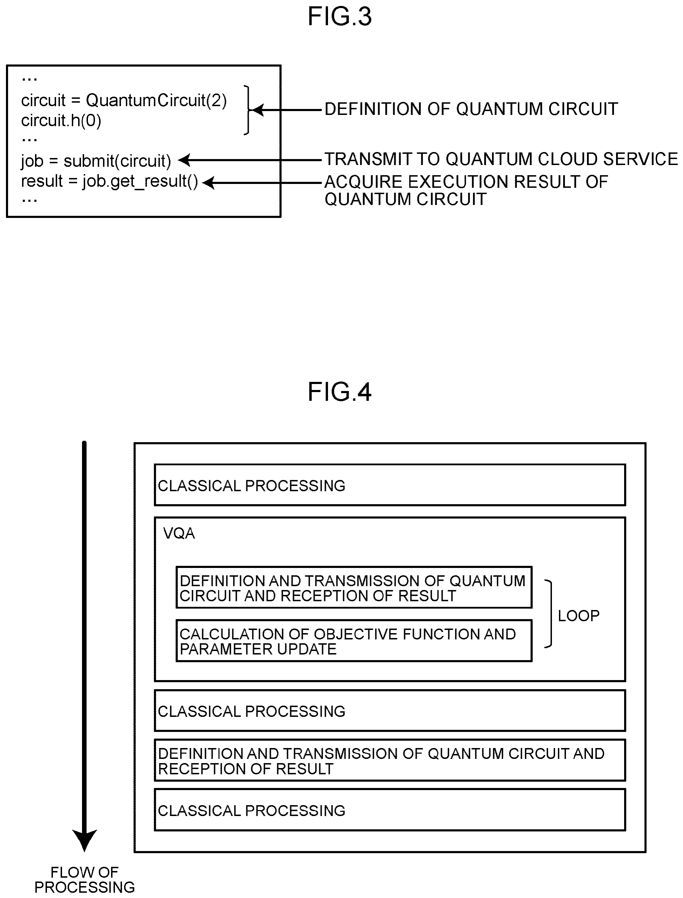

An application program (hereinafter, referred to as a "quantum program") for executing a quantum computer will be described next. FIG. 3 is a diagram illustrating an example of a quantum program. As illustrated in FIG. 3, a user defines structure information on a quantum circuit in a programming language, such as Python (registered trademark) to generate the quantum program. The quantum program is then executed via a classical computer and the quantum circuit defined is transmitted, via a network, such as the Internet, to a service that provides a quantum computer via the cloud. Furthermore, the classical computer that has executed the quantum program receives a result of execution of the quantum circuit from the quantum computer and further executes processing on the basis of the result of the execution.

Various kinds of processing other than the definition and transmission of the quantum circuit and reception of the execution result are also described in the quantum program. FIG. 4 is a diagram illustrating an example of a configuration of the quantum program. FIG. 4 illustrates the configuration of the quantum program along a flow of processing, and "definition and transmission of quantum circuit and reception of result" in a block of a VQA therein corresponds to a description portion of the quantum program illustrated in FIG. 3. As illustrated in FIG. 4, the quantum program may include, for example, calculation of an objective function in the VQA, parameter update processing, and classical processing not using a quantum computer, in addition to the definition and transmission of the quantum circuit and the reception of the execution result. The classical processing not using a quantum computer is, for example, license authentication processing upon use of an application, rendering of a graphical user interface (GUI), event processing, or database update processing. A loop process section corresponding to "definition and transmission of quantum circuit and reception of result" and "calculation of objective function and parameter update" processing in FIG. 4 is a section where the processing proceeds back and forth between the classical computer and the quantum computer. Such a section where data need to be repeatedly exchanged between a classical computer and a quantum computer may hereinafter be simply referred to as a "loop section".

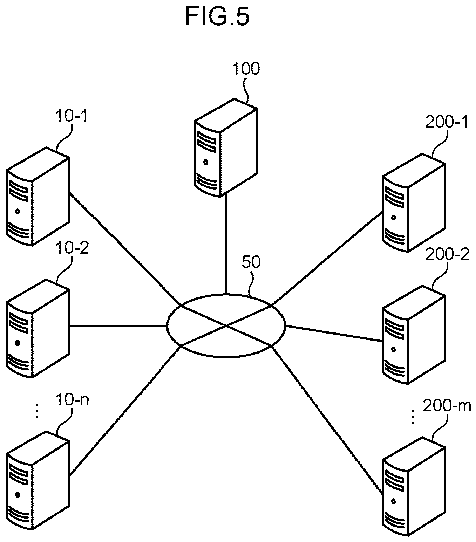

A system configuration for utilizing a quantum computer by using a quantum program like the one described by use of FIG. 3 and FIG. 4 will be described next. FIG. 5 is a diagram illustrating an example of a configuration of an information processing system according to the embodiment. As illustrated in FIG. 5, the information processing system according to the embodiment is a system where user computers 10-1 to 10-n and a management computer 100 that are classical computers are communicably connected to each other via a network 50. Furthermore, quantum computers 200-1 to 200-m, which are quantum computers, and the management computer 100 are also communicably connected to each other via the network 50. The user computers 10-1 to 10-n and the quantum computers 200-1 to 200-m may hereinafter be collectively referred to as "user computers 10" and "quantum computers 200" respectively, where n and m are any natural numbers.

Various communication networks, such as, for example, intranets and the Internet, regardless of whether the communication networks are wired or wireless, may be adopted as the network 50. Furthermore, the network 50 may be not a single network, and may be formed of, for example, an intranet and the Internet via a network device, such as a gateway, or another device (not illustrated in the drawings).

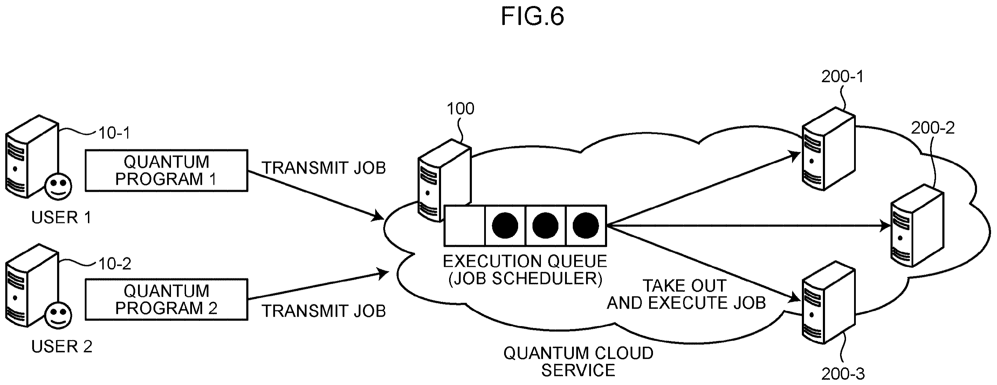

The user computers 10, the management computer 100, and the quantum computers 200 will each be described by use of FIG. 6. FIG. 6 is a diagram for description of job scheduling by a quantum computer.

The user computers 10 are, for example, ordinary computers used by respective users, that is, classical computers and are information processing apparatuses, such as desktop personal computers (PCs) and/or notebook PCs. As illustrated in FIG. 6, each user executes, for example, a quantum program defining a quantum circuit so as to execute a hybrid quantum-classical algorithm via a user computer 10. The user computer 10 then transmits the quantum circuit defined and serving as a calculation job, to the management computer 100. The calculation job is thereby submitted to a job scheduler of the management computer 100.

The management computer 100 is, for example, a classical computer managed by a service provider of a service that provides a quantum computer via the cloud and is an information processing apparatus, such as a server computer. As illustrated in FIG. 6, upon reception of a calculation job from a user computer 10, for example, the management computer 100 submits the calculation job to the job scheduler. The management computer 100 then determines, for example, a job to be executed next, by means of the job scheduler and transmits an instruction for the determined job to be executed, to a quantum computer 200.

The quantum computer 200 is, for example, an information processing apparatus, such as a server computer, that is managed by a service provider of a service that provides a quantum computer and that is driven by use of quantum-mechanical phenomena. As illustrated in FIG. 6, upon reception of an instruction to execute a job from the management computer 100, for example, the quantum computer 200 takes out and executes the job from the job scheduler. The quantum computer 200 then transmits, for example, a result of the execution of the job to a user computer 10 of a target user via the management computer 100.

However, the number of quantum computers and the numbers of quantum bits that are able to be used by the quantum computers are both typically small and it may take one day or more for a job to be actually executed from placement of the job in an execution queue.

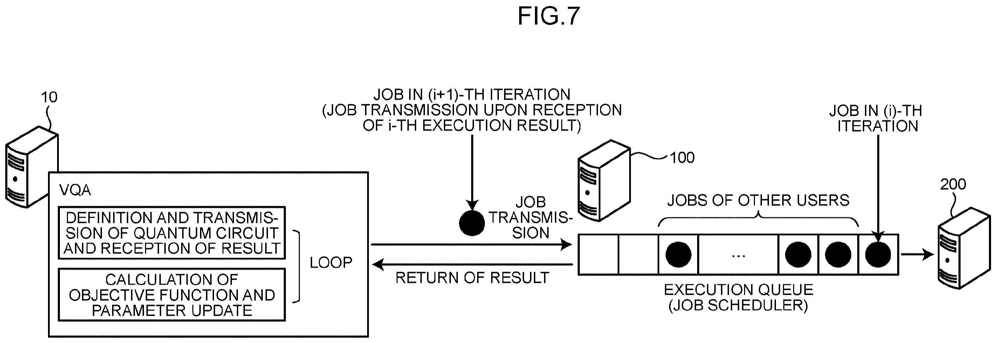

FIG. 7 is a diagram for description of job scheduling by a hybrid quantum-classical algorithm. As illustrated in FIG. 7, in a hybrid quantum-classical algorithm, such as a VQA, processing repeatedly proceeds back and forth between a user computer 10 and a quantum computer 200. Therefore, if job scheduling is done with a job being submitted to the end of an execution queue every time the processing proceeds back and forth, a long time is taken for the algorithm to be completed. As illustrated in FIG. 7, for example, more than one iteration is needed for the algorithm to be completed for the VQA and a definition of a quantum circuit in the (i+1)-th iteration is determined upon reception of an execution result for the quantum circuit in the i-th iteration. Therefore, in a case where 100 iterations are needed for the algorithm to be completed and one day is needed for a job to be executed from placement of the job in an execution queue, for example, 100 days or more will be needed for the algorithm to be completed.

Therefore, one of objects of this embodiment is to shorten the execution time of processing, such as a VQA, that repeatedly proceeds back and forth between a quantum computer 200 and a user computer 10. A long waiting time for completion of the algorithm also leads to the following problems. For example, calibration, which is adjustment for reducing operation errors of quantum bits, is typically performed for quantum computers periodically, for example, once a day. Therefore, frequent occurrences of calibration during execution of the algorithm in the quantum computer 200 leads to a problem that steady results may be difficult to be output by the algorithm.

There is a method for shortening the execution time of processing that repeatedly proceeds back and forth between a quantum computer 200 and a user computer 10, the method being a method of giving priority to the processing and executing the processing with priority over jobs of other users. The job of the user given priority is thereby processed with priority over the jobs of the other users and the waiting time for execution of the quantum computer 200 is thus able to be shortened significantly.

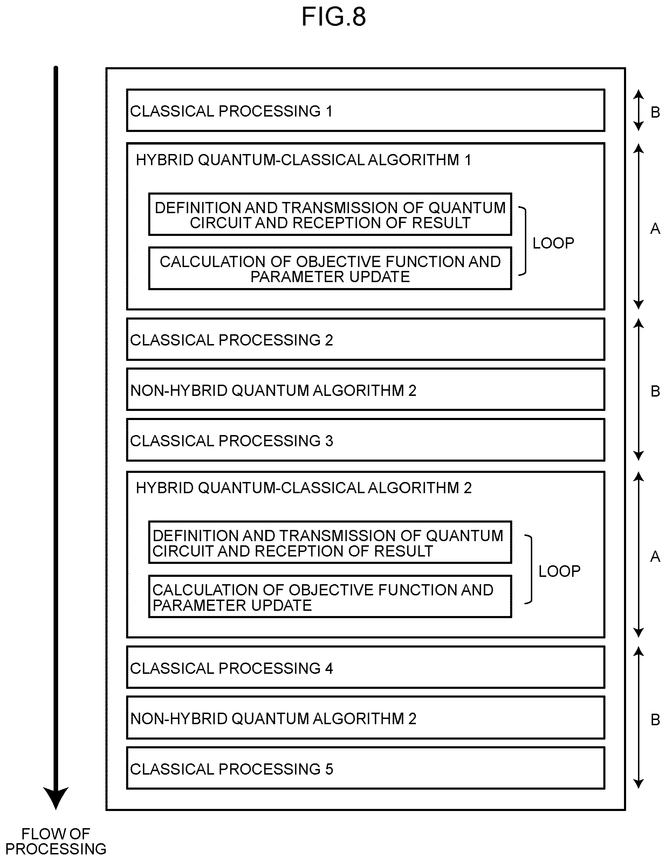

However, this method of giving priority leads to the following problems. FIG. 8 is a diagram illustrating an example of a configuration of a quantum program. For example, the quantum program includes, not only processing of hybrid quantum-classical algorithms that use a quantum computer 200 and that are illustrated in sections A in FIG. 8 but also processing that is not of a hybrid quantum-classical algorithm and that is illustrated in sections B in FIG. 8. The processing that is not of a hybrid quantum-classical algorithm herein is, for example, processing by a classical computer, the processing not utilizing a quantum computer 200. Or the processing that is not of a hybrid quantum-classical algorithm is, for example, processing that utilizes a quantum computer 200 but does not repeatedly proceed back and forth between a quantum computer 200 and a user computer 10. Therefore, giving priority in units of quantum programs results in priority being given to jobs that actually do not need to be processed with priority, the jobs being like those illustrated in the sections B in FIG. 8. Furthermore, there is also a method of letting a user specify a job or section to be prioritized, but this method depends on the discretion of the user and there is thus no guarantee that priority will be given to the minimum necessary jobs or sections. Furthermore, a malicious user who wants to use a quantum computer with priority will be able to give priority to the whole quantum program. To avoid such problems, one idea is to have a service provider determine a section to implement a hybrid quantum-classical algorithm and give priority to the section, without leaving it to the discretion of a user, the service provider being a service provider that provides a quantum computer via the cloud.

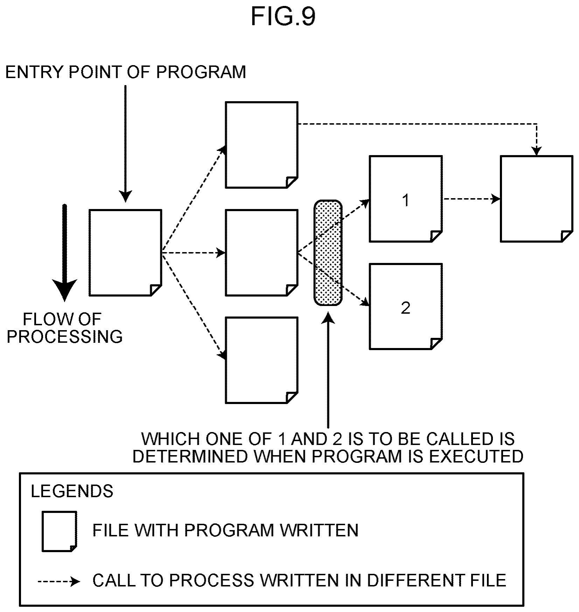

However, a program is typically implemented by being divided into plural files or methods, and a section to implement a hybrid quantum-classical algorithm may thus be unobvious and determination of this section may thus be difficult. FIG. 9 is a diagram for description of execution of an ordinary program. As illustrated in FIG. 9, the ordinary program is not described in one file and is described by being divided into plural files or methods. Therefore, in a case like the quantum program illustrated in FIG. 8 also, each process is described by being divided into plural files or methods. Furthermore, as illustrated in FIG. 9, an element, such as, for example, dynamic binding, where whether a file 1 or a file 2 is to be called is determined upon execution of the program is present in the program. Therefore, determining a section to implement a hybrid quantum-classical algorithm from a program is not easy.

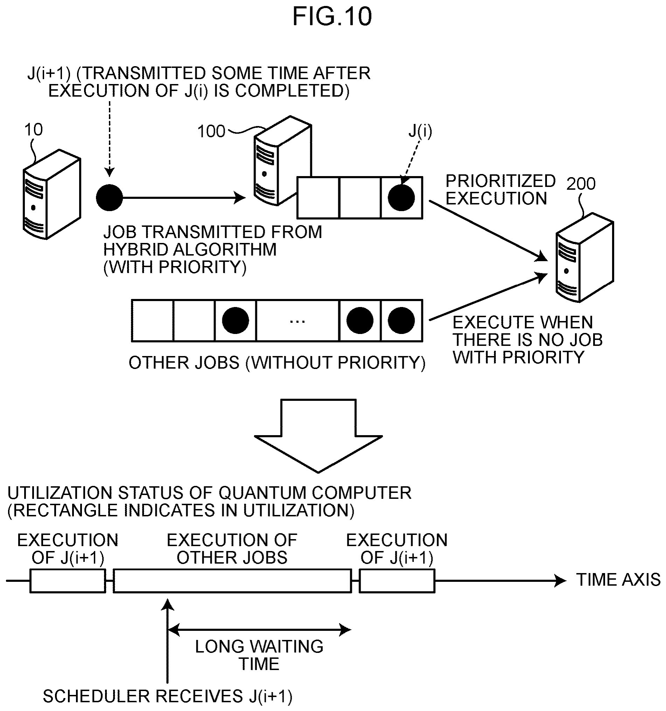

Furthermore, the following problem occurs even if priority is given to a specific job or section. FIG. 10 is a diagram for description of a waiting time generated by a hybrid quantum-classical algorithm. In FIG. 10, a job transmitted to the job scheduler in the i-th repetition of a quantum program including a hybrid quantum-classical algorithm on a user computer 10 is denoted by J(i). Furthermore, it is assumed that priority has been given to each job of the hybrid quantum-classical algorithm, such as J(i) .

After execution of J(i) is completed, the quantum program on the user computer 10 receives a result of the execution, performs calculation of an objective function and parameter update processing, for example, and thereafter transmits the next job J(i+1) to the job scheduler. Because processing not utilizing a quantum computer 200 is thus included between J(i) and J(i+1), even if priority has been given to each job, processing for another job not prioritized may be executed as illustrated in FIG. 10. In this case, as illustrated at the bottom in FIG. 10, even if the job scheduler receives J(i+1), if the other job not prioritized is already being executed, a long waiting time may be generated before J(i+1) is executed. This is because the job scheduler does not know when J(i+1) will be transmitted to the job scheduler after the execution of J(i) and is thus unable to determine its executable time for and its executable amount of other jobs. After executing J(i), the job scheduler may be controlled so as to stop executing any other job until the job scheduler receives J(i+1), but the unused time of the quantum computer 200 will be increased and the resources will be wasted in this case.

In view of these problems, in this embodiment, a loop process section in a quantum program including a hybrid quantum-classical algorithm, such as VQA, is determined and an execution time of the determined section and a utilization time of a quantum computer are estimated. On the basis of the estimated utilization time of the quantum computer, scheduling for execution of the quantum computer is performed.

### Functional Configuration of User Computer 10

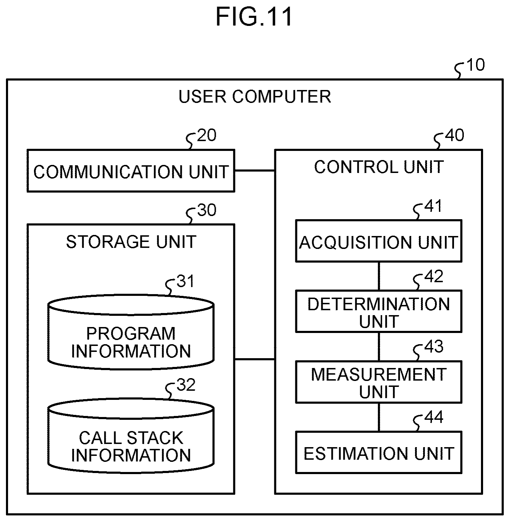

A functional configuration of the user computers 10, which are classical computers used by respective users will be described next. FIG. 11 is a diagram illustrating an example of a configuration of the user computers 10 according to the embodiment. As illustrated in FIG. 11, a user computer 10 has a communication unit 20, a storage unit 30, and a control unit 40. Furthermore, for example, the user computer 10 may include input devices, such as a keyboard and a mouse, and an output device, such as a display, although these are not illustrated in the drawings.

The communication unit 20 is a processing unit that controls communication with another computer, for example, and is, for example, a communication interface, such as a network interface card.

The storage unit 30 has a function of storing various data and a program executed by the control unit 40 and is implemented by, for example, storage devices, such as a memory and a hard disk. The storage unit 30 stores program information 31 and call stack information 32, for example.

A quantum program for utilizing a quantum computer and information related to this program, such as those described by use of FIG. 8 and FIG. 9, for example, are stored in the program information 31.

A call stack acquired from a quantum program for utilizing a quantum computer and information related to the call stack, for example, are stored in the call stack information 32.

The above mentioned information stored in the storage unit 30 is just an example, and the storage unit 30 may store various kinds of information other than the above mentioned information.

The control unit 40 is a processing unit that governs the whole user computer 10 and is, for example, a processor, such as a central processing unit (CPU). The control unit 40 includes processing units, such as an acquisition unit 41, a determination unit 42, a measurement unit 43, and an estimation unit 44. Each of these processing units is an example of an electronic circuit that the processor has or an example of a process executed by the processor.

The acquisition unit 41 is, for example, a computer executable program for utilizing a quantum computer 200 and acquires a call stack of a first program, which is a quantum program.

The determination unit 42 determines, on the basis of a call stack acquired by the acquisition unit 41, a loop process section in the first program, for example. For example, the determination unit 42 determines a first loop statement that is the outermost one of loop statements including an execution process of the quantum computer 200 and determines a range of this first loop statement as a loop process section. In a case where the determination unit 42 is unable to access source code including the execution process of the quantum computer 200, the determination unit 42 determines, as the loop process section, a range from a start to an end of an execution site of a process for optimization based on an execution result of the quantum computer 200.

The measurement unit 43 measures, for example, a first execution time of the section determined by the determination unit 42, and a first utilization time of the quantum computer 200 in the section determined.

On the basis of the first execution time and first utilization time measured by the measurement unit 43, for example, the estimation unit 44 estimates a second execution time of the section determined, and a second utilization time of the quantum computer in the section determined. The second execution time and the second utilization time are future times for future utilization of the quantum computer 200. That is, if the first execution time and the first utilization time are times in a first iteration of the section determined, the second execution time and the second utilization time are times in a second iteration that is after the first iteration. Furthermore, the second iteration is an iteration to be executed in the future. Furthermore, estimation of each time may be performed by use of, for example, a time series analysis technique, which is an existing technique, on the basis of time series data, such as the first execution time and the first utilization time.

Functional Configuration of Management Computer 100

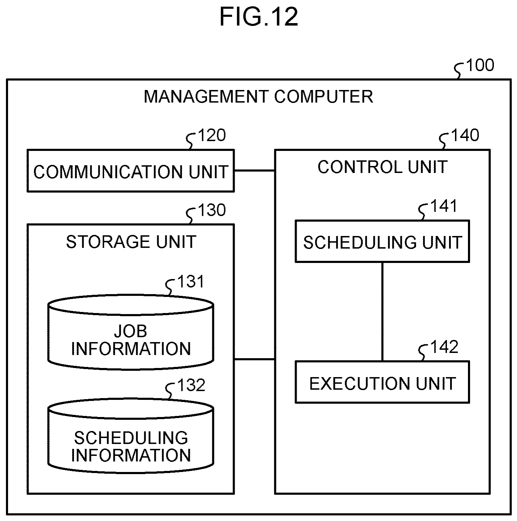

A functional configuration of the management computer 100, which is a classical computer managed by, for example, a service provider of a service that provides a quantum computer 200 via the cloud, will be described next. FIG. 12 is a diagram illustrating an example of a configuration of the management computer 100 according to the embodiment. As illustrated in FIG. 12, the management computer 100 has a communication unit 120, a storage unit 130, and a control unit 140. Because the management computer 100 operates as a server computer, the management computer 100 may include no physical input and output devices, in contrast to the user computers 10.

The communication unit 120 is a processing unit that controls communication with another computer, for example, and is, for example, a communication interface, such as a network interface card.

The storage unit 130 has a function of storing various data and a program executed by the control unit 140 and is implemented by, for example, storage devices, such as a memory and a hard disk. The storage unit 130 stores job information 131 and scheduling information 132, for example.

Jobs transmitted respectively from the user computers 10 and information related to these jobs, for example, are stored in the job information 131.

Information that is submitted to the job scheduler and related to each job scheduled, for example, is stored in the scheduling information 132.

The above mentioned information stored in the storage unit 130 is just an example, and the storage unit 130 may store various kinds of information other than the above mentioned information.

The control unit 140 is a processing unit that governs the whole management computer 100 and is, for example, a processor, such as a CPU. The control unit 140 includes processing units, such as a scheduling unit 141 and an execution unit 142. Each of these processing units is an example of an electronic circuit that the processor has or an example of a process executed by the processor.

The scheduling unit 141 performs, for example, scheduling for execution of the quantum computer 200 on the basis of a second utilization time and a second utilization time estimated by an estimation unit 44 of a user computer 10. The scheduling for the execution of the quantum computer 200 herein includes, for example, scheduling related to execution of a first program, which is a quantum program, and a second program other than the first program. Furthermore, for example, the scheduling unit 141 performs scheduling to enable the quantum computer 200 to be utilized for at least the second utilization time or more before elapse of the second execution time from a start of a second iteration of a section determined. The second iteration is an iteration to be executed in the future after a first iteration related to a first execution time and a first utilization time measured by the measurement unit 43 of the user computer 10.

The execution unit 142 transmits execution instructions for respective jobs scheduled by the scheduling unit 141 to the quantum computer 200 in scheduled order and executes the quantum computer 200, for example.

### Functional Configuration of Quantum Computer 200

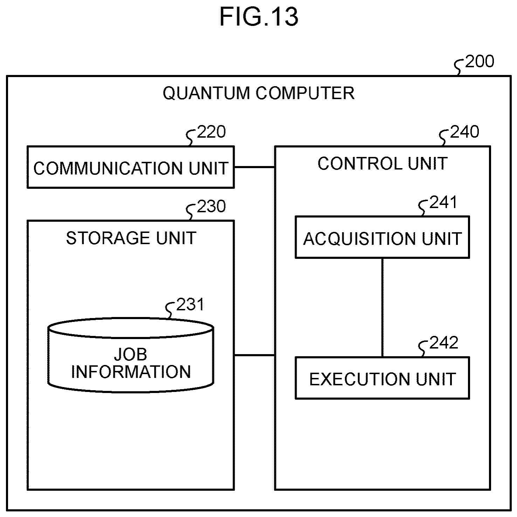

A functional configuration of a quantum computer 200 managed by a service provider of a service that provides quantum computers and driven by use of quantum-mechanical phenomena will be described next. FIG. 13 is a diagram illustrating an example of a configuration of the quantum computer 200 according to the embodiment. As illustrated in FIG. 13, the quantum computer 200 has a communication unit 220, a storage unit 230, and a control unit 240.

The communication unit 120 is a processing unit that controls communication with another computer, for example, and is, for example, a communication interface, such as a network interface card.

The storage unit 230 has a function of storing various data and a program executed by the control unit 240 and is implemented by, for example, storage devices, such as a memory and a hard disk. The storage unit 230 stores, for example, job information 231.

Jobs transmitted respectively from the user computers 10 and information related to these jobs, for example, are stored in the job information 231.

The above mentioned information stored in the storage unit 230 is just an example, and the storage unit 230 may store various kinds of information other than the above mentioned information.

The control unit 240 is a processing unit that governs the whole quantum computer 200 and is, for example, a processor, such as a quantum processing unit (QPU). The control unit 240 includes processing units, such as an acquisition unit 241 and an execution unit 242. Each of these processing units is an example of an electronic circuit that the processor has or an example of a process executed by the processor.

The acquisition unit 241 acquires, for example, a job to be executed, from the job scheduler of the management computer 100, on the basis of a job execution instruction transmitted to the management computer 100.

The execution unit 242 executes the job acquired by the acquisition unit 241 and transmits an execution result for the job to a user computer 10 of a target user via the management computer 100, for example.

### Flow of Processing

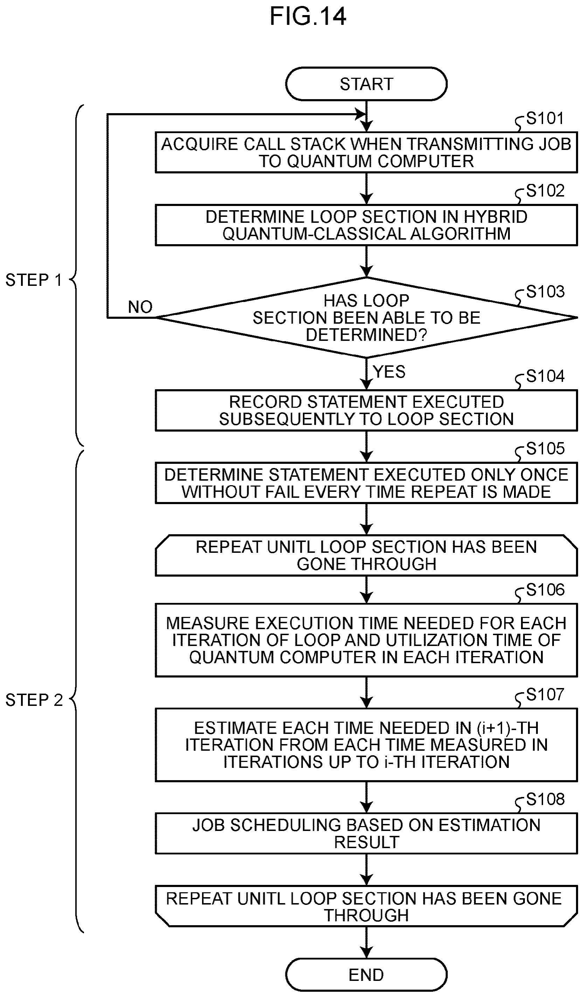

Determination of a loop section in a quantum program, estimation of an execution time and a utilization time of a quantum computer 200 in the loop section, and a job scheduling process for the quantum computer 200 will be described next. These processes may hereinafter be collectively referred to as a "time estimation and job scheduling process". FIG. 14 is a flowchart illustrating an example of a flow of the time estimation and job scheduling process according to the embodiment. In this time estimation and job scheduling process, as illustrated in FIG. 14, a process of determining a loop section in a quantum program is referred to as a step 1. Furthermore, similarly, a process of estimating an execution time and a utilization time of a quantum computer 200 in the loop section and performing job scheduling for the quantum computer 200 is referred to as a step 2. Details of processing in each of these steps will be described later.

First, as illustrated in FIG. 14, a user computer 10 acquires, for example, a call stack when transmitting a job to the quantum computer 200 (Step S101).

Subsequently, the user computer 10 determines a loop section in a hybrid quantum-classical algorithm in the quantum program, on the basis of the call stack acquired at Step S101, for example (Step S102). In a case where the user computer 10 has been unable to determine a loop section (Step S103: No), the user computer 10 returns to Step S101 and repeats the process by acquiring a new call stack, for example.

On the contrary, in a case where the user computer 10 has been able to determine a loop section (Step S103: Yes), the user computer 10 records a statement to be executed subsequently to the loop section determined at Step S102, the statement being in the quantum program (Step S104). Processing at Steps S106 to S108 thereafter is repeated until the loop section determined at Step S102 has been gone through, that is, until processing in each iteration of the loop section has been completed.

Subsequently, the user computer 10 determines, for example, a statement that is executed only once without fail every time the loop section determined at Step S102 is repeated, the statement being in the quantum program (Step S105).

Subsequently, the user computer 10 measures, for example, an execution time needed for each iteration that is a repetition of the loop section determined at Step S102 and a utilization time of the quantum computer 200 in each iteration (Step S106).

Subsequently, at Step S107, for example, the user computer 10 estimates an execution time and a utilization time needed in the (i+1)-th iteration from the execution times and utilization times measured in the iterations up to the i-th iteration (Step S107).

Subsequently, for example, the management computer 100 performs job scheduling on the basis of the execution time and utilization time needed for the (i+1)-th iteration estimated at Step S107 (Step S108). The job scheduling is performed by the management computer 100 receiving an estimation result for execution times and utilization times from the user computers of respective users. After Step S108 has been executed, the time estimation and job scheduling process illustrated in FIG. 14 is ended and an execution instruction for each job scheduled at Step S108 is transmitted by the management computer 100 to the quantum computer 200. On the basis of the execution instruction, the quantum computer 200 acquires and executes the job to be executed from the job scheduler of the management computer 100 and transmits an execution result for the job to a user computer 10 of a target user.

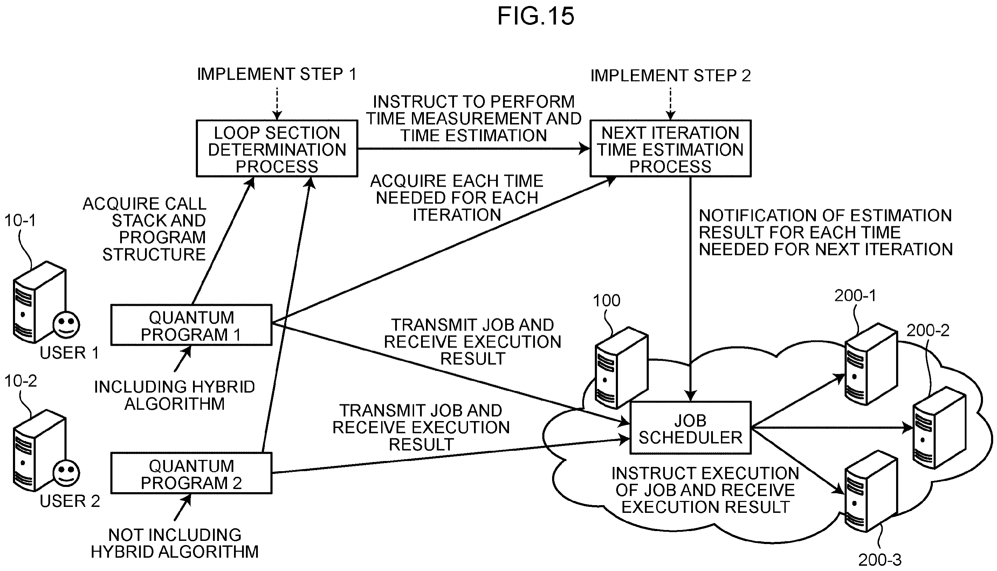

A functional configuration of the time estimation and job scheduling process illustrated in FIG. 14 will be described next. FIG. 15 is a diagram illustrating an example of a functional configuration of the time estimation and job scheduling process according to the embodiment. FIG. 15 illustrates an example where the user computers 10-1 and 10-2 respectively used by users 1 and 2 respectively execute a loop section determination process and a next iteration time estimation process for quantum programs 1 and 2. The loop section determination process illustrated in FIG. 15 corresponds to the step 1 in FIG. 14. Furthermore, the next iteration time estimation process illustrated in FIG. 15 corresponds to the process of estimating the execution time in the loop section and the utilization time of the quantum computer 200, at the step 2 in FIG. 4. That is, the next iteration is the (i+1)-th iteration in FIG. 14. For the example in FIG. 15, the two user computers 10-1 and 10-2 are illustrated as user computers 10 but the number of user computers 10 may be more than two.

Furthermore, as illustrated in FIG. 15, the management computer 100 receives respective times needed in the next iteration estimated by the next iteration time estimation process and respective jobs, from the user computers 10-1 and 10-2. On the basis of the estimated execution time in the loop section and the estimated utilization time of the quantum computer 200, the management computer 100 then performs scheduling of the jobs. This scheduling corresponds to the job scheduling process for the quantum computer 200 at the step 2 in FIG. 14. Furthermore, as illustrated in FIG. 15, the management computer 100 transmits an execution instruction for each job scheduled, to quantum computers 200, receives an execution result for each job, and transmits the execution results to the user computers 10 of the target users. For the example in FIG. 15, the three quantum computers 200-1 to 200-3 are illustrated as the quantum computers 200 but the number of quantum computers 200 may be more than three.

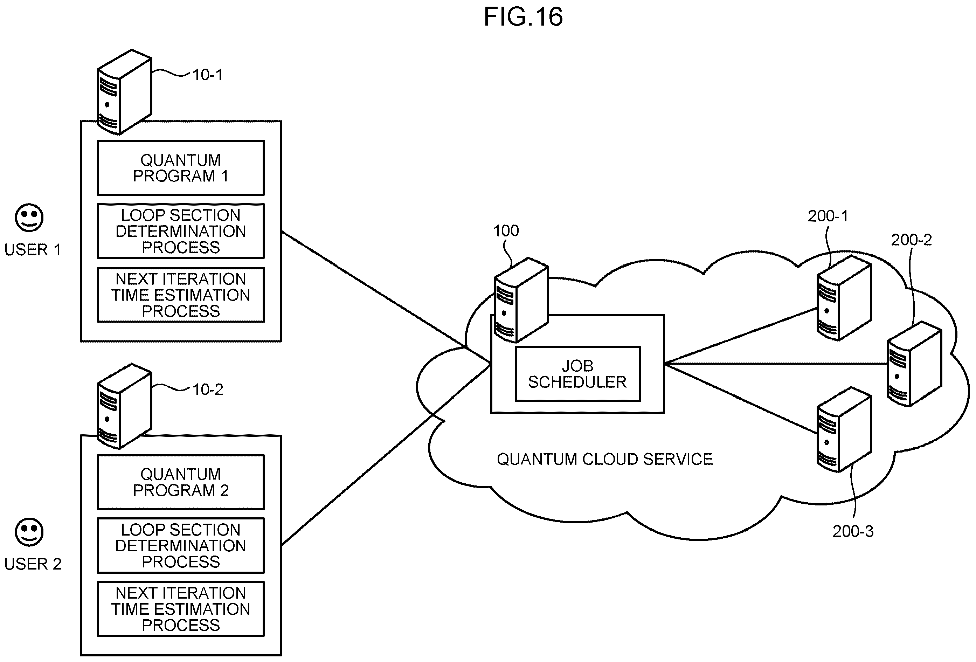

A system configuration for executing the time estimation and job scheduling process illustrated in FIG. 14 and FIG. 15 will be described next. FIG. 16 is a diagram illustrating an example of a configuration of an information processing system for executing the time estimation and job scheduling process according to the embodiment. For the example in FIG. 16, the loop section determination process and next iteration time estimation process illustrated in FIG. 15 are illustrated as being executed by the user computers 10 of the respective users. However, the next iteration time estimation process may be executed by the management computer 100. Because source code of the quantum program 1 or 2 needs to be accessed in the loop section determination process, the loop section determination process is executed by the user computer 10 of each user.

### Loop Section Determination Process

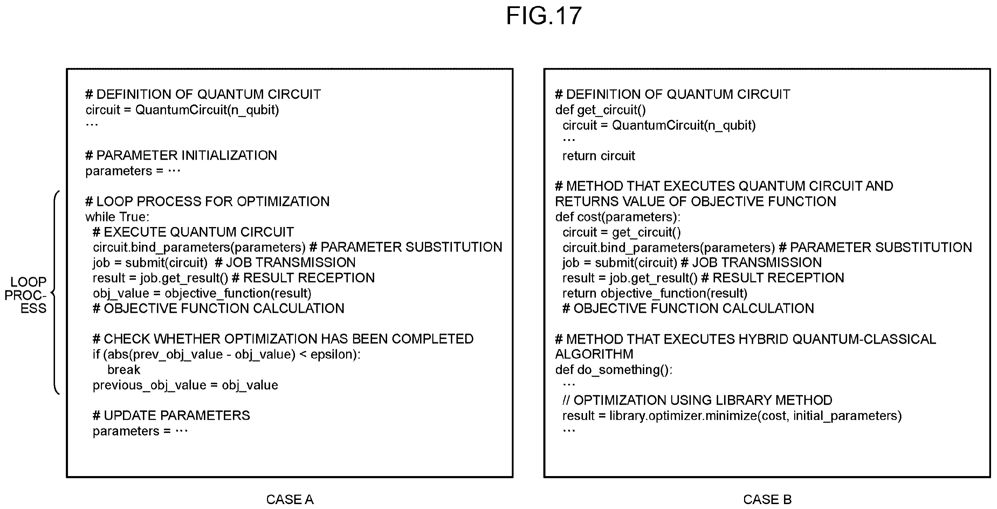

The loop section determination process illustrated in FIG. 15 and FIG. 16 will be more specifically described next. A loop section is a section where data need to be exchanged between a user computer 10 and a quantum computer 200 in a hybrid quantum-classical algorithm included in a quantum program. A more specific loop section will be described now by use of FIG. 17.

FIG. 17 is a diagram illustrating examples of source code of a quantum program of a hybrid quantum-classical algorithm. A case A illustrated on the left in FIG. 17 is an example where a loop process has been explicitly described as a while statement in the source code of the quantum program and the span of the loop process is determined as a loop section by information analysis of the source code, for example. In contrast, a case B illustrated on the right in FIG. 17 is a case where a definition (calculation method) of an objective function is received and a library method for optimization of parameters to maximize or minimize the value of the objective function is called. In the case B, in contrast to the case A, no loop process appears in the source code and a loop process like the one in the case A will be executed in the library method. Furthermore, in the case B, source code of the library method may be able to be accessed, or the library method may be generated as a binary file (also called an executable binary or binary data) and source code may be unable to be accessed. Details will be described later, but in a case where the source code is unable to be accessed in the case B, information on the source code is unable to be analyzed, a loop section in the source code is unable to be determined like in the case A, and a loop section is thus determined approximately. In the examples of FIG. 17, for convenience, the source code is described collectively in one file in both of the cases A and B, but in practice, the source code is typically described by being divided into plural files or methods.

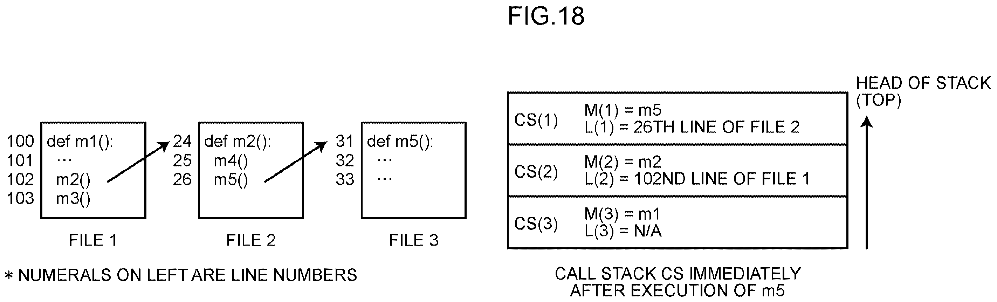

Because determination of a loop section is performed on the basis of a call stack of a quantum program, a call stack will be described next. FIG. 18 is a diagram for description of a call stack according to the embodiment. As described above, source code is typically described by being divided into plural files or methods, and in an example of FIG. 18 also, source code is described in three files, a file 1, a file 2, and a file 3. As to the files 1 to 3, as illustrated in FIG. 18, the file 1 is described to call and execute a method m2 described in the file 2. Furthermore, the file 2 is described to call and execute a method m5 described in the file 3. Furthermore, numerals on the left of these files, such as 100 to 103 for the file 1, indicate line numbers in the source code for these files.

Furthermore, what is illustrated on the right in FIG. 18 is a call stack CS, and for the example in FIG. 18, the call stack immediately after execution of the method m5 is illustrated. Call information on the methods of the program being executed is stored hierarchically in the call stack. Furthermore, in the example of FIG. 18, elements of the call stack, denoted as CS(1), CS(2), and CS(3), are called stack frames and store information on which methods were called from which positions of the source code. The stack frames may additionally store, for example, information related to values of variables and states of the methods. Furthermore, CS(1) is the head of the call stack and corresponds to the method currently being executed. In the example of FIG. 18, a method corresponding to CS(i) is M(i) and the position where M(i) is called in the source code is L(i).

More specifically, as illustrated in FIG. 18, CS(1) corresponding to the method currently being executed indicates that the method m5 in the file 3 represented by M(1) was called and executed from the 26th line of the file 2 indicated by L(1). Furthermore, CS(2), which is the next call stack, indicates that the method m2 in the file 2 represented by M(2), which called the method m5, was called and executed from the 102nd line of the file 1 represented by L(2). Furthermore, CS(3), which is the call stack subsequent to the next call stack, indicates that a method m1 in the file 1 represented by M(3), which called the method m2, was called and executed from the 102nd line of the file 1 represented by L(2). The file 1 includes an entry point indicating a starting point where the program or source code is executed and for L(3) of CS(3), for example, a value, such as N/A (not applicable), is stored.

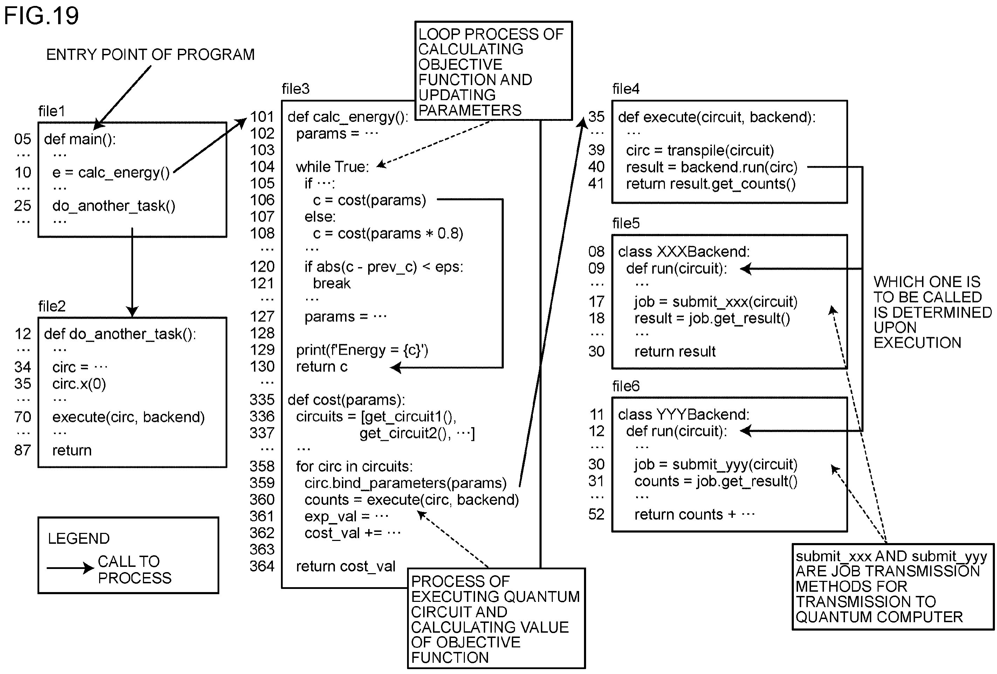

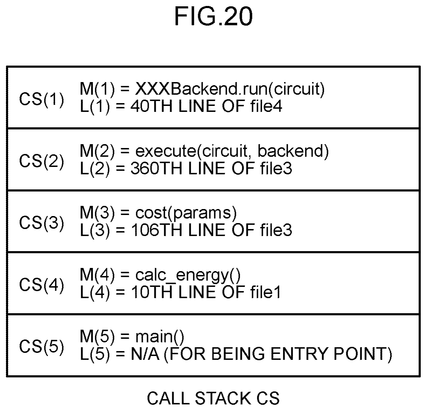

A loop section determination process in the case A illustrated in FIG. 17 will be described next by use of FIG. 19 and FIG. 20. In a case where the source code of the library method is able to be accessed even in the case B, a loop section is determined by a process similar to that in the case A. FIG. 19 is a diagram for description of determination of a loop section in the case A, according to the embodiment. FIG. 20 is a diagram for description of a call stack in the case A according to the embodiment.

In the loop section determination process, first, for example, a user computer 10 acquires a call stack immediately after calling a method for job transmission to a quantum computer 200. The call stack acquired here is a call stack CS illustrated in FIG. 20, for example. The user computer 10 then refers to stack frames CS(N-1) to CS(1) in order, finds the outermost loop statement, and determines a statement to be executed subsequently to the loop statement, as Sₙₑₓₜ, for example. The user computer 10 then determines, for example, a range from the present that is the time point of acquisition of the call stack to a time point immediately before execution of Sₙₑₓₜ, as a loop section in a hybrid quantum-classical algorithm.

More specifically, firstly, for example, the user computer 10 refers to CS(4) of the call stack CS illustrated in FIG. 20, this CS(4) corresponding to the stack frame CS(N-1). As illustrate in FIG. 19, because no loop statement surrounding a 10th line of a file 1 represented by LS(4) corresponding to CS(4) is present, the user computer 10 refers to, for example, CS(3) next.

As to a loop statement surrounding a 106th line of a file 3 represented by LS(3) corresponding to CS(3), a while statement is present in a 104th line and the user computer 10 thus determines the 104th line as the outermost loop statement Sₗₒₒₚ. Furthermore, for example, the user computer 10 determines a statement in a 129th line executed subsequently to Sₗₒₒₚ as Sₙₑₓₜ. The user computer 10 then determines, for example, a range from the present that is the time point of acquisition of the call stack to a time point immediately before execution of Sₙₑₓₜ in the 129th line of the file 3 as a loop section in the hybrid quantum-classical algorithm.

A 360th line of the file 3 illustrated in FIG. 19 is a process of executing the quantum computer 200 and a file 5 or a file 6 is called by a file 4 called from that process. Which one of the file 5 and the file 6 is to be called and executed is determined when the program is executed. Furthermore, a method submit _xxx of the file 5 or a method submit_yyy of the file 6 is a method of performing job transmission to the quantum computer 200.

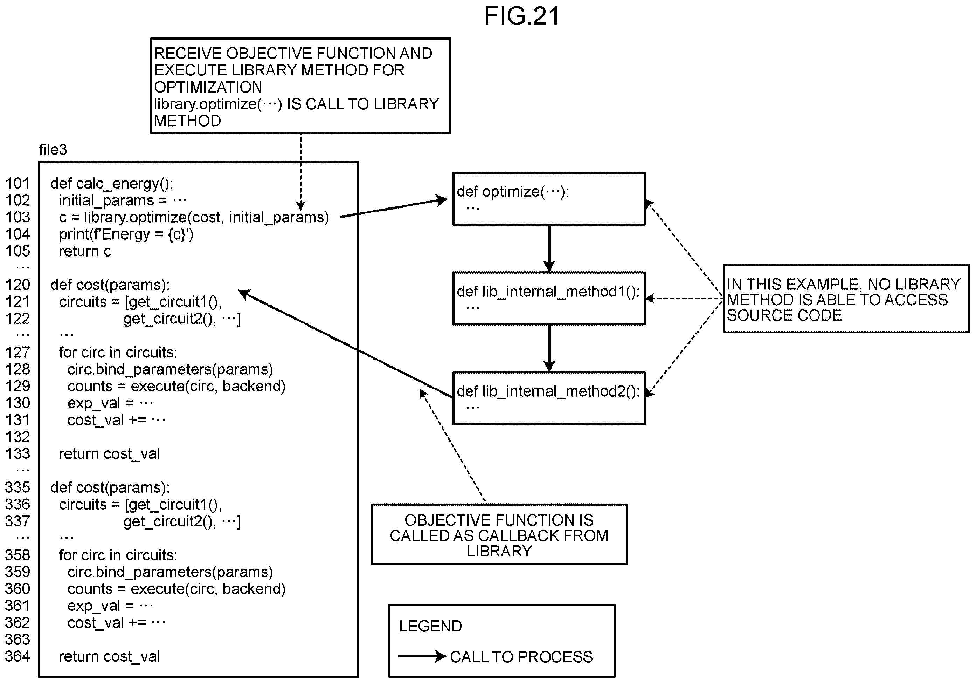

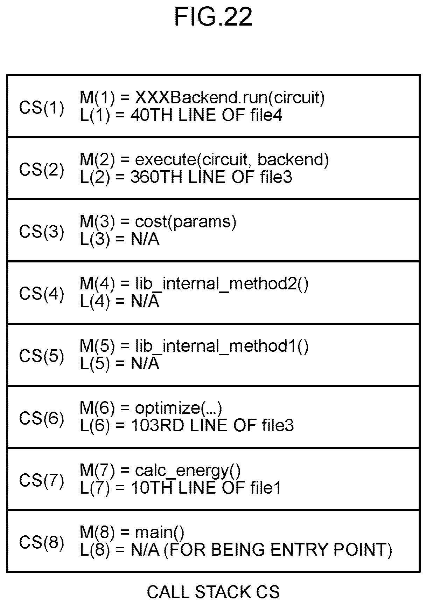

The loop section determination process in the case A where the loop process in the source code of the quantum program is explicitly described has been described above and a loop section determination process in the case B will be described next by use of FIG. 21 and FIG. 22. FIG. 21 is a diagram for description of a determination of a loop section in the case B, according to the embodiment. FIG. 22 is a diagram for description of a call stack in the case B according to the embodiment. A file 1 and a file 2 in FIG. 21 are similar to those in the case A illustrated in FIG. 19 and descriptions of these files 1 and 2 have thus been omitted. Furthermore, as described above, in a case where the source code of the library method is able to be accessed even in the case B, a loop section is determined by processing similar to that in the case A.

In the loop section determination process in the case B, similarly to the case A, a user computer 10 acquires a call stack immediately after calling a method of performing job transmission to a quantum computer 200. The call stack acquired here is, for example, a call stack CS illustrated in FIG. 22.

The user computer 10 then refers to, similarly to the case A, stack frames CS(N-1)to CS(1) of the call stack in order. However, in the case B, no loop statement is described in the source code and the library method having a loop statement described therein is unable to be accessed. Therefore, the content of the source code of library methods, optimize, lib_internal_method1, and lib_internal_method2, illustrated in FIG. 21 is unknown and call positions of these methods are also unknown. In a case where the call positions are unknown, for example, as illustrated in FIG. 22, the value, N/A (not applicable), is stored for L(3), L(4), and L(5) of the call stack.

In a case where there is such a library method that is unable to be accessed, as to the call stack illustrated in FIG. 22 and used here for description, the user computer 10 determines the library method that is unable to be accessed in CS(5) by referring to CS(7) and CS(6). Subsequently, the user computer 10 determines, as Sₙₑₓₜ, a statement in a 104th line executed subsequently to a 103rd line of a file 3 represented by L(6) corresponding to CS(6) stored in the call stack after CS(5). The number, 6, of the stack frame of L(6) corresponding to Sₙₑₓₜ will be denoted by kₘᵢₙ for use in processing thereafter. This kₘᵢₙ is defined as the minimum k where source code including L(k) is able to be accessed, for example, when a call stack stored after the call stack, for which the inaccessible library method has been determined, is CS(k). The user computer 10 then determines, for example, a range from the present that is the time point of acquisition of the call stack to a time point immediately before execution of Sₙₑₓₜ in the 104th line of the file 3, as a loop section in a hybrid quantum-classical algorithm. That is, in the case B, the range from the start to the end of the execution site of a process for optimization based on an execution result of the quantum computer 200 is determined approximately as a loop process section.

Supplementarily to the loop section determination process, the process of acquiring the call stack may be changed according to whether the loop section determination process is executed by the same process as the quantum program executed by the user computer 10 or executed by a different process.

Acquisition of a call stack in a case where a loop section determination process is executed by the same process as a quantum program executed by a user computer 10 will be described first. In this case, a method for job transmission to a quantum computer 200 is provided as part of a development library of the quantum program from a quantum cloud service provider to a user. At the user end, source code is described in the method so that processes are executed in the following order, (1) to (3). (1) A call stack of its own program is acquired. The function of acquiring the call stack of its own program is provided as a standard library in many programming languages. (2) A loop section is determined. (3) A job is transmitted to the quantum computer 200. Executing these processes in this order enables the acquisition of a call stack and the determination of a loop section to be executed immediately before the transmission of a job to the quantum computer 200.

Acquisition of a call stack in a case where a loop section determination process is executed by a process different from that of a quantum program executed by a user computer 10 will be described now. There are some methods of accessing call stack information on a program executed by a different process and a method of utilizing a debugger library described below is thus just an example. Using a debugger library enables access to information on execution of a program that operates in a different process. At the developer end, source code is described in a method for job transmission to a quantum computer 200 so that processes are executed in the following order, (1) to (7).

(1) A connection from another process, which is, for example, a process executing a loop section determination process is waited for. The connection from another process is able to be waited for by use of, for example, a debugger library function. (2) A job is transmitted to the quantum computer 200. Furthermore, in the other process executing the loop section detection process, the following processing is executed. (3) A connection is made to a quantum program. The connection to the quantum program is enabled by use of a debugger library function. (4) Execution of the quantum program is interrupted. (5) A call stack of the quantum program is acquired by use of a debugger library function. (6) A loop section determination process is executed. (7) The execution of the quantum program is resumed. Executing these processes in this order enables the acquisition of a call stack and the determination of a loop section to be executed immediately before transmission of a job to the quantum computer 200.

### Next Iteration Time Estimation Process

The next iteration time estimation process illustrated in FIG. 15 and FIG. 16 will be more specifically described next. The next iteration time estimation process is a process of estimating a utilization time of a quantum computer 200 to give priority for utilization of the quantum computer 200 to a loop section determined in a loop section determination process. More specifically, a user computer 10 determines, for example, one iteration in a loop section determined and estimates a utilization time of the quantum computer in that one iteration. A time that the priority for utilization of the quantum computer 200 is given for is thereby able to be determined. This process will be described in more detail hereinafter.

The following description is on a process of determining one iteration in a loop section determined. A user computer 10 determines, as Sₘₐᵣₖₑᵣᵣ for example, a statement that is executed only once without fail every time a repetition is made in the loop section determined. The user computer 10 than determines, as one iteration, for example, a range from a time point T, at which Sₘₐᵣₖₑᵣ, was executed, to a time point U, at which Sₘₐᵣₖₑᵣ was executed again before Sₙₑₓₜ was executed.

The process of determining Sₘₐᵣₖₑᵣ in the case A where source code is accessible and that in the case B where the source code is inaccessible may be different from each other. As described above, in the case A, the outermost loop statement Sₗₒₒₚ is determined. Therefore, the user computer 10 selects one statement that is inside the outermost loop statement Sₗₒₒₚ in the same file as the outermost loop statement Sₗₒₒₚ and that is not surrounded by a control statement, such as a branching statement or a loop statement, other than Sₗₒₒₚ and determines the selected statement as Sₘₐᵣₖₑᵣ.

On the contrary, in the case B, for example, kₘᵢₙ described with respect to the call stack for the case B illustrated in FIG. 22 is used. For example, a user computer 10 determines, as a call stack CS(u), uₘₐₓ, which is the largest u satisfying conditions, "u < kₘᵢₙ and source code of M(u) is accessible". The user computer 10 then selects one statement that is inside M(uₘₐₓ) in the same file as M(uₘₐₓ) and that is not surrounded by a control statement, such as a branching statement or a loop statement, and determines the selected statement as Sₘₐᵣₖₑᵣ.

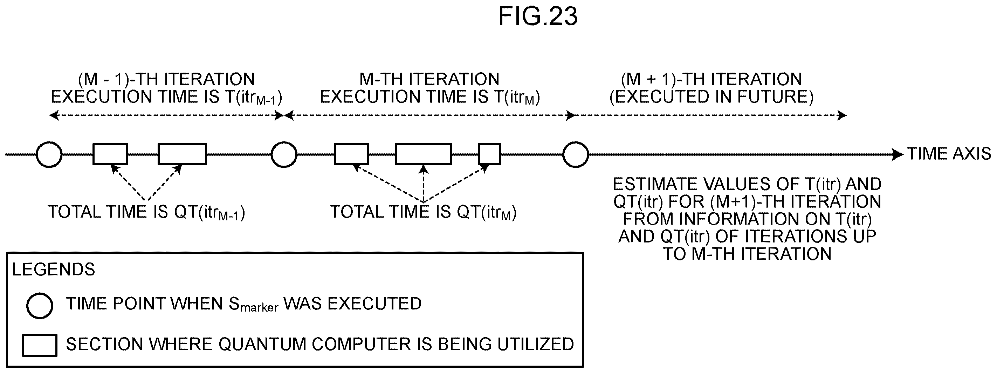

When Sₘₐᵣₖₑᵣ is determined and the one iteration has been able to be determined, the user computer 10 next estimates, for example, a utilization time of the quantum computer 200 in the one iteration determined. FIG. 23 is a diagram for description of a time estimation process according to the embodiment. As illustrated in FIG. 23, a section from execution of Sₘₐᵣₖₑᵣ to next execution of Sₘₐᵣₖₑᵣ is one iteration. Furthermore, in the example of FIG. 23, iterations up to the M-th iteration are past iterations and the (M+1)-th iteration is the iteration to be executed in the future. A user computer 10 estimates, for example, a utilization time of a quantum computer 200 in the (M+1)-th iteration. In the following description, the past iterations will be denoted by itr₁, itr₂, ... itr_{M} and the estimated (M+1)-th iteration by itr_{M+1}. Furthermore, a utilization time of the quantum computer 200 executed in any iteration itrⱼ will be denoted by QT(itrⱼ). As illustrated in FIG. 23, there may be plural sections where the quantum computer 200 is utilized in one iteration and in that case, the total of the utilization times of these sections is QT(itrⱼ). Furthermore, the execution time of the one iteration, that is, the time that is the total of QT(itrⱼ) and execution times of processes other than the quantum computer 200 is denoted by T(itrⱼ). The user computer 10 then regards, for example, T(itr₁), T(itr₂), ... T(itr_{M}) as time series data and estimates, on the basis of these time series data, T(itr_{M+1}) by using a time series analysis technique, which is an existing technique. Similarly, the user computer 10 estimates QT(itr_{M+1}) by regarding QT(itr₁), QT(itr₂), ... QT(itr_{M}) as time series data.

The next iteration time estimation process executed by the user computer 10 has been described above, but the next iteration time estimation process may be executed by the management computer 100.

### Job Scheduling Process

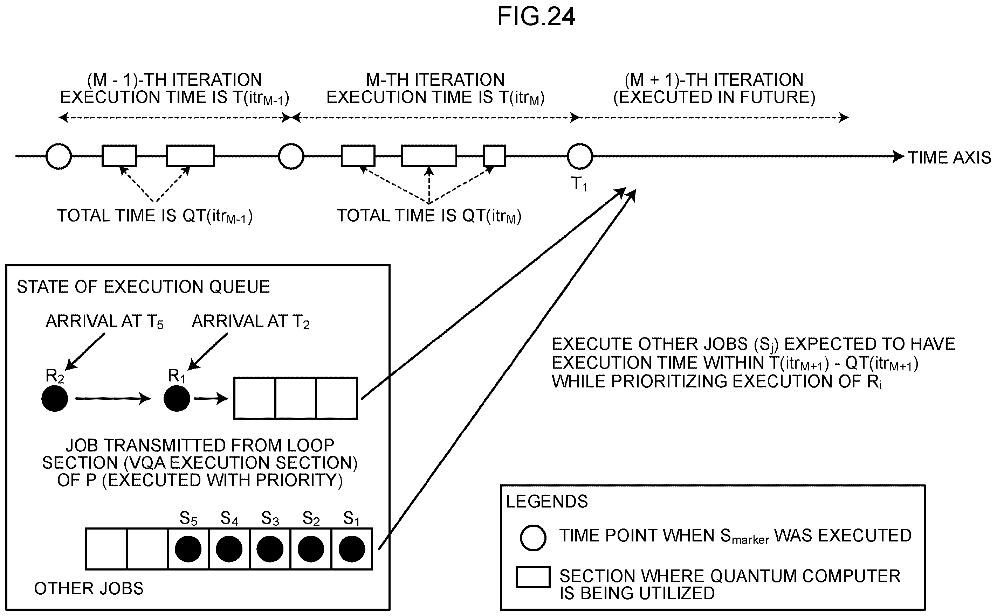

The job scheduling process illustrated in FIG. 14 and FIG. 15 will be more specifically described next. Firstly, in the following description, a quantum program that priority for utilization of a quantum computer 200 is given to will be denoted by P. For example, the management computer 100 performs scheduling so that the quantum program P is able to utilize the quantum computer 200 for at least a time QT(itr_{M+1}), before an estimated time T(itr_{M+1}) elapses from the start of itr_{M+1}. Furthermore, for example, the management computer 100 performs scheduling so that part of jobs from quantum programs other than the quantum program P will serve as a target to be executed, the part being expected to be completed within T(itr_{M+1}) - QT(itr_{M+1}). This will hereinafter be described in more detail along a time series by use of FIG. 24.

It is assumed that as illustrated in FIG. 24, jobs S₁ to S₅ other than those of the quantum program P are present in an execution queue and are in an execution waiting state. Furthermore, a job Rᵢ of the quantum program P, to which priority has been given, is assumed to be not present in the execution queue yet. In this case, because the job Rᵢ to be executed with priority is not present in the execution queue, S₁ to S₅ in the execution waiting state are executed for an execution time not exceeding "T(itr_{M+1}) - QT(itr_{M+1}) ". For example, if the execution time of S₁ is expected to not exceed "T(itr_{M+1}) - QT (itr_{M+1}) ", S₁ is executed.

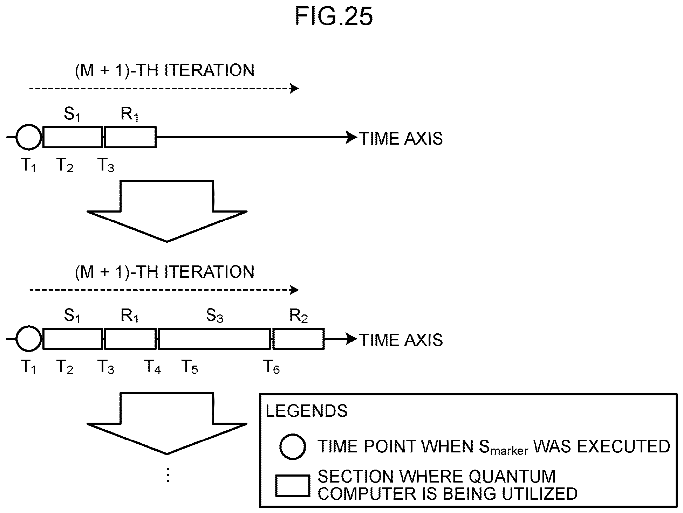

Furthermore, as illustrated in FIG. 24, a time point T₁ is a time point, at which Sₘₐᵣₖₑᵣ is executed after the M-th iteration and time points from a time point T₂ and later are time points after the time point T₁. As illustrated in FIG. 24, at the time point T₂, a job R₁ of the quantum program P arrives at the job scheduler and is stored in the execution queue. FIG. 25 is a diagram for description of the job scheduling process along a time series, according to the embodiment. Because S₁ is being executed before the job R₁ of the quantum program P is stored in the execution queue, as illustrated at the top in FIG. 25, R₁ is executed with priority over other jobs when the execution of S₁ is completed at a time point T₃.

Subsequently, as illustrated at the bottom in FIG. 25, when the execution of R₁ is completed at a time point T₄, the job Rᵢ of the quantum program is not present in the execution queue, and the other jobs are thus executed for an execution time within a range of "T(itr_{M+1}) - QT (itr_{M+1}) - (execution time of S₁)". For example, if the execution time of S₂ is expected to exceed "T(itr_{M+1}) - QT (itr_{M+1}) - (execution time of S₁)", S₃ expected to not exceed it is executed first.

Subsequently, as illustrated in FIG. 24, at a time point T₅, a job R₂ of the quantum program P arrives at the job scheduler and is stored in the execution queue. As illustrated at the bottom in FIG. 25, when the execution of S₃ is completed at a time point T₆, the job R₂ is present in the execution queue, and R₂ is thus executed with priority over the other jobs. Thereafter, similar processing is repeatedly executed until the (M+1)-th iteration is completed.

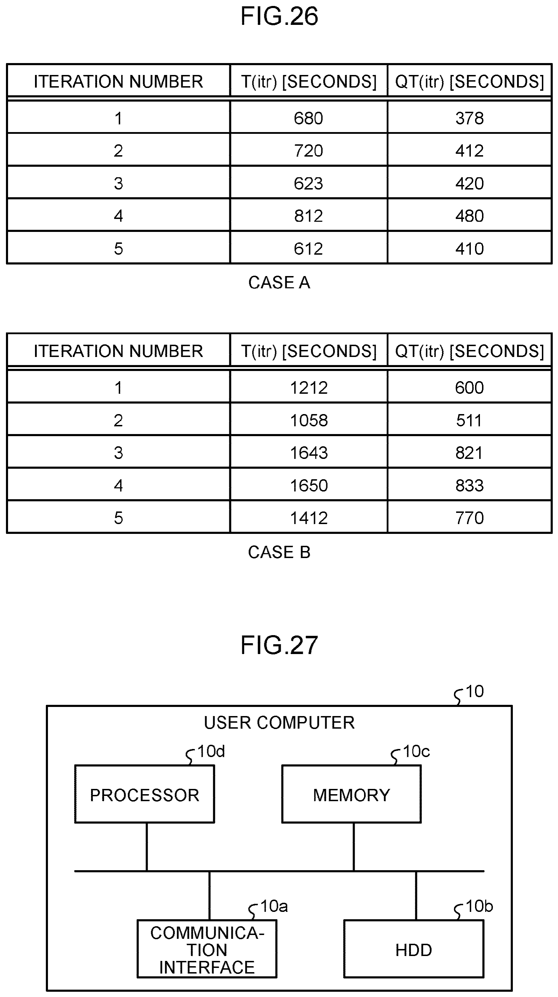

As supplemental information, the next iteration time estimation process and the job scheduling process will now be described by use of specific times. FIG. 26 is a diagram illustrating an example of execution times and utilization times of respective iterations, according to the embodiment.

The case A will be described first. It is assumed that execution times of the iterations and utilization times of the quantum computer 200, up to the fifth iteration of the quantum program P in the case A were like the times illustrated on the left in FIG. 26. It is also assumed that times for the sixth iteration were estimated as T(itr₆) = 783 seconds and QT(itr₆) = 447 seconds, from the times up to the fifth iteration using exponential smoothing (ETS), for example. In this case, the management computer 100 performs scheduling so that the quantum program P is able to utilize the quantum computer 200 for at least 447 seconds or more during 783 seconds from the start of the sixth iteration, for example. Furthermore, the management computer 100 performs scheduling so that jobs transmitted from other quantum programs are executed in range where the execution time of these jobs is expected to be 336 seconds (= 783 seconds - 447 seconds) or less, for example.

The case B will be described next. It is assumed that execution times of respective iterations and utilization times of the quantum computer 200, up to the fifth iteration of the quantum program P in the case B were like the times illustrated on the right in FIG. 26. It is also assumed that times for the sixth iteration were estimated as T(itr₆) = 1632 seconds and QT (itr₆) = 821 seconds, from the times up to the fifth iteration using exponential smoothing, for example. In this case, the management computer 100 performs scheduling so that the quantum program P is able to utilize the quantum computer 200 for at least 821 seconds or more during 1632 seconds from the start of the sixth iteration, for example. Furthermore, the management computer 100 performs scheduling so that jobs transmitted from other quantum programs are executed in range where the execution time of these job is expected to be 811 seconds (= 1632 seconds - 821 seconds) or less, for example.

As described above, unused times of quantum computers 200 are able to be minimized, waste of resources is able to be reduced, and the waiting time for processing that repeatedly proceeds back and forth between a user computer 10 and a quantum computer 200 is able to be shortened.

### Effects

As described above, a user computer 10 acquires a call stack of a first program for utilizing a quantum computer 200, determines a section of a loop process in the first program on the basis of the call stack, measures a first execution time of the section determined and a first utilization time of the quantum computer 200 in the section determined, and estimates, on the basis of the first execution time and the first utilization time, a second execution time of the section determined and a second utilization time of the quantum computer 200 in the section determined for a case where the quantum computer 200 is to be utilized in the future.

The user computer 10 thus estimates future times from the execution time of the loop section in the quantum program and the utilization time of the quantum computer 200, which have been determined on the basis of the call stack. The user computer 10 thereby enables the execution time of an algorithm to be shortened, the algorithm having a combination of processing by the quantum computer 200 and processing by the user computer 10.

Furthermore, on the basis of the second execution time and the second utilization time, the management computer 100 executes scheduling related to execution of the first program and a second program.

The user computer 10 thereby enables the execution time of an algorithm to be shortened, the algorithm having a combination of processing by the quantum computer 200 and processing by the user computer 10.

Furthermore, the process of determining the section, executed by the user computer 10 includes a process of determining a first loop statement that is the outermost one of loop statements including an execution process of the quantum computer 200 and determining a range of the first loop statement as the section, the loop statement being in the first program.

The user computer 10 thereby enables the execution time of an algorithm to be shortened, the algorithm having a combination of processing by the quantum computer 200 and processing by the user computer 10.

Furthermore, the process of determining the section, executed by the user computer 10 includes a process of determining a range from a start to an end of an execution site of a process for optimization based on an execution result of the quantum computer 200.

The user computer 10 thereby enables the execution time of an algorithm to be shortened even if the user computer 10 is unable to access the source code, the algorithm having a combination of processing by the quantum computer 200 and processing by the user computer 10.

Furthermore, the process of measuring the first execution time and first utilization time, executed by the user computer 10 includes a process of measuring the first execution time of a first iteration of the section determined and the first utilization time in the first iteration, and the process of estimating the second execution time and second utilization time, executed by the user computer 10 includes a process of estimating, on the basis of the first execution time and the first utilization time, the second execution time of a second iteration of the section determined and the second utilization time in the second iteration.

The user computer 10 thereby enables the execution time of an algorithm to be shortened, the algorithm having a combination of processing by the quantum computer 200 and processing by the user computer 10.

Furthermore, the management computer 100 performs scheduling for execution of the quantum computer 200, on the basis of the second execution time and the second utilization time.

The user computer 10 thereby enables both reduction in the waste of resources of the quantum computer 200 and reduction in the execution time of an algorithm having a combination of processing by the quantum computer 200 and processing by the user computer 10.

Furthermore, the process of performing scheduling, executed by the user computer 10 includes a process of performing the scheduling so that the quantum computer is able to be utilized for at least the second utilization time or more before elapse of the second execution time from a start of the second iteration of the section determined.

The user computer 10 thereby enables both reduction in the waste of resources of the quantum computer 200 and reduction in the execution time of an algorithm having a combination of processing by the quantum computer 200 and processing by the user computer 10.

### System

The processing procedures, control procedures, specific names, and information including various data and parameters, which have been described above and illustrated in the drawings may be modified in any way unless particularly stated otherwise. Furthermore, the specific examples, distributions, and numerical values described with respect to the embodiment are just examples and may be modified in any way.

Furthermore, specific modes of distribution and integration of components of the user computers 10, the management computer 100, and the quantum computers 200 are not limited to those illustrated in the drawings. For example, the determination unit 42 of the user computer 10 may be distributed into plural processing units or the acquisition unit 41 and the determination unit 42 of the user computer 10 may be integrated into one processing unit. That is, all or part of these components may be functionally or physically distributed or integrated in any units according to various loads and use situations. Furthermore, all or any part of the processing functions of each apparatus may be implemented by a CPU or QPU and a program analyzed and executed by the CPU or QPU or may be implemented as hardware by wired logic.

FIG. 27 is a diagram illustrating an example of a hardware configuration of a user computer 10 according to the embodiment. FIG. 27 illustrates the hardware configuration of the user computer 10 but a similar configuration may be applied to the management computer 100 and a quantum computer 200. As illustrated in FIG. 27, the user computer 10 has a communication interface 10a, a hard disk drive (HDD) 10b, a memory 10c, and a processor 10d. Furthermore, these units illustrated in FIG. 27 are connected to one another via a bus, for example.

The communication interface 10a is, for example, a network interface card and performs communication with another information processing apparatus. The HDD 10b stores, for example, a program and data that cause respective functions of the user computer 10 to operate.

The processor 10d is, for example, a CPU, a microprocessing unit (MPU), or a graphics processing unit (GPU). A processor in a quantum computer 200 may be, for example, a QPU, as described above. Furthermore, the processor 10d may be implemented by, for example, an integrated circuit, such as an application specific integrated circuit (ASIC) or a field programmable gate array (FPGA). The processor 10d reads a program that executes processing similar to that by the respective processing units illustrated in FIG. 11, for example, from the HDD 10b and loads the program into the memory 10c. The processor 10d is thereby able to operate as a hardware circuit that executes processes implementing the respective functions of the user computer 10.

Furthermore, the user computer 10 may implement the same functions as those in the embodiment by reading the program from a recording medium by means of a medium reading device and executing the program read. The program referred to in this other embodiment is not limited to being executed by the user computer 10. For example, the above described embodiment may be similarly applied to a case where another information processing apparatus executes the program or a case where another information processing apparatus and the user computer 10 execute the program in cooperation with each other.

The program may be distributed via a network, such as the Internet. Furthermore, the program may be recorded in a computer-readable storage medium, such as a hard disk, a flexible disk (FD), a CD-ROM, a magnetooptical (MO) disk, or a digital versatile disc (DVD). The program may be executed by being read by the user computer 10, for example, from a recording medium.

### Reference Signs List

- 10: USER COMPUTER

- 10a: COMMUNICATION INTERFACE
- 10b: HDD
- 10c: MEMORY
- 10d: PROCESSOR
- 20: COMMUNICATION UNIT
- 30: STORAGE UNIT
- 31: PROGRAM INFORMATION
- 32: CALL STACK INFORMATION
- 40: CONTROL UNIT
- 41: ACQUISITION UNIT
- 42: DETERMINATION UNIT
- 43: MEASUREMENT UNIT
- 44: ESTIMATION UNIT
- 50: NETWORK
- 100: MANAGEMENT COMPUTER
- 120: COMMUNICATION UNIT
- 130: STORAGE UNIT
- 131: JOB INFORMATION
- 132: SCHEDULING INFORMATION
- 140: CONTROL UNIT
- 141: SCHEDULING UNIT
- 142: EXECUTION UNIT
- 200: QUANTUM COMPUTER
- 220: COMMUNICATION UNIT
- 230: STORAGE UNIT
- 231: JOB INFORMATION
- 240: CONTROL UNIT
- 241: ACQUISITION UNIT
- 242: EXECUTION UNIT

## Claims

1. An information processing program that causes a computer to execute a process comprising:
acquiring a call stack of a first program for utilizing a quantum computer;
determining a section of a loop process in the first program, based on the call stack;
measuring a first execution time of the section determined and a first utilization time of the quantum computer in the section determined; and
estimating, based on the first execution time and the first utilization time, a second execution time of the section determined and a second utilization time of the quantum computer in the section determined.

2. The information processing program according to claim 1, wherein the computer is caused to execute scheduling related to execution of the first program and a second program, based on the second execution time and the second utilization time.

3. The information processing program according to claim 1, wherein the determining the section includes:
determining a first loop statement that is the outermost one of loop statements including an execution process of the quantum computer, the loop statements being in the first program; and
determining a range of the first loop statement as the section.

4. The information processing program according to claim 1, wherein the determining the section includes determining, as the section, a range from a start to an end of an execution site of a process for optimization based on an execution result of the quantum computer.

5. The information processing program according to claim 1, wherein
the measuring the first execution time and the first utilization time includes measuring the first execution time of a first iteration of the section determined and the first utilization time in the first iteration, and
the estimating the second execution time and the second utilization time includes estimating, based on the first execution time and the first utilization time, the second execution time of a second iteration of the section determined and the second utilization time in the second iteration.

6. The information processing program according to any one of claims 1 to 5, wherein the computer is caused to execute, based on the second execution time and the second utilization time, scheduling for execution of the quantum computer.

7. The information processing program according to claim 6, wherein the performing the scheduling includes performing the scheduling to enable the quantum computer to be utilized for at least the second utilization time or more before elapse of the second execution time from a start of the second iteration of the section determined.

8. An information processing apparatus comprising a control unit configured to execute a process comprising:
acquiring a call stack of a first program for utilizing a quantum computer;
determining a section of a loop process in the first program, based on the call stack;
measuring a first execution time of the section determined and a first utilization time of the quantum computer in the section determined; and
estimating, based on the first execution time and the first utilization time, a second execution time of the section determined and a second utilization time of the quantum computer in the section determined.

9. An information processing method, wherein a computer executes a process comprising:
acquiring a call stack of a first program for utilizing a quantum computer;
determining a section of a loop process in the first program, based on the call stack;
measuring a first execution time of the section determined and a first utilization time of the quantum computer in the section determined; and
estimating, based on the first execution time and the first utilization time, a second execution time of the section determined and a second utilization time of the quantum computer in the section determined.
